# EUROPEAN PATENT APPLICATION

(11) **EP 3 961 593 A1**
(43) Date of publication of application: **02.03.2022**
(21) Application number: 20815659.6
(22) Date of filing: 19.05.2020
(51) Int. Cl.: G07G 1/06, G07G 1/12, G06Q 30/06

(54) **SETTLEMENT SYSTEM AND SETTLEMENT METHOD**

(30) Priority: 31.05.2019 JP 2019102338
(71) Applicant: GLORY LTD., Himeji-shi Hyogo 670-8567 (JP)
(72) Inventor: TAKEMURA, Junichi, Hyogo 670-8567 (JP); HIGASHIYAMA, Minoru, Hyogo 670-8567 (JP)
(74) Representative: Jenkins, Peter David
(86) International application number: PCT/JP2020/019802
(87) International publication number: WO 2020/241381

(57) **Abstract**

To perform a transaction by cash payment in a store that does not manage cash for transactions, a settlement system, which performs a settlement for a monetary amount of the transaction when the transaction is performed with a customer in a store, is configured with: a registration apparatus installed in the store and configured to register transaction information including a transaction amount of the transaction at the time of the transaction with the customer; and a cash handling apparatus installed outside the store and configured to receive for a payment process of the transaction amount that is included in the transaction information of the customer registered by the registration apparatus and identified for the payment process, and to perform a checking process for indicating that the payment process on the transaction information has been completed.

## Description

### TECHNICAL FIELD

The present invention relates to a settlement system and a settlement method used for a settlement for a monetary amount of a transaction with a customer when the transaction is performed in a store.

### BACKGROUND ART

Conventionally, systems for paying a monetary amount of a transaction have been used in various stores. For example, Patent Literature 1 discloses a POS (Point of Sales) system. The POS system can perform both transactions by cash and transactions by electronic payment. When a customer purchases an item, information about the item is registered by using a registration apparatus and a monetary amount to be paid by the customer for purchasing the item is calculated in the POS system. The customer can pay the monetary amount by cash. The customer performs the cash payment by inserting cash into a cash handling apparatus that is provided separately from the registration apparatus in the POS system. Alternatively, the customer can pay the monetary amount by electronic payment, by using electronic money or a credit card.

### CITATION LIST

### [PATENT LITERATURE]

[PTL 1] Japanese Laid-Open Patent Publication No. 2018-67364

### SUMMARY OF THE INVENTION

### PROBLEMS TO BE SOLVED BY THE INVENTION

In recent years, with the increase in customers who use electronic payment, stores that perform transactions only by electronic payment have appeared. In such a store, a store clerk does not need to prepare cash used for returning to customers as change. Also, the store clerk does not need to carry cash of proceeds from sales, from the store to a bank. The store does not need to manage cash for transactions, and thus can reduce the cost for cash management. However, when a customer requests a transaction by cash payment, the store cannot accept the request because the store cannot handle cash for transactions. Therefore, the store may have to decline transactions with customers who request cash payment.

The present invention has been made in view of the problem of the above conventional art, and one object of the present invention is to provide a settlement system and a settlement method that allow to perform a transaction by cash payment even in a store that does not manage cash for transactions.

### SOLUTION TO THE PROBLEMS

To solve the above-described problem and achieve the above-described object, the present invention provides a settlement system for performing a payment process for a monetary amount of a transaction when the transaction is performed with a customer in a store, and the settlement system includes: a registration apparatus installed in the store and configured to register transaction information including a transaction amount of the transaction at the time of the transaction with the customer; and a cash handling apparatus installed outside the store and configured to receive cash for a payment process of the transaction amount that is included in the transaction information of the customer registered by the registration apparatus and identified for the payment process, and to perform a checking process for indicating that the payment process on the transaction information has been completed.

In the above invention, the registration apparatus makes a medium have information for identifying the registered transaction information, and the cash handling apparatus receives input of the information from the medium, and identifies the transaction information based on the inputted information.

In the above invention, the checking process includes a process of outputting information indicating that the payment process has been completed, to the medium.

In the above invention, the settlement system further includes a management apparatus communicably connected to the registration apparatus and the cash handling apparatus, and configured to manage transaction information of each transaction registered by the registration apparatus and identification information for identifying each transaction, in association with each other and manage whether or not the payment process has been completed by using the cash handling apparatus, for each transaction.

In the above invention, the cash handling apparatus receives input of the identification information for identifying each transaction, and performs the payment process based on the transaction information that is associated with the inputted identification information and managed by the management apparatus.

In the above invention, the registration apparatus receives input of the identification information for identifying each transaction, and notifies whether or not the payment process on the transaction information has been completed, based on the transaction information that is associated with the inputted identification information and managed by the management apparatus.

In the above invention, the settlement system includes a plurality of the cash handling apparatuses, and the management apparatus specifies a cash handling apparatus that is to receive the cash from the customer to perform the payment process, based on inventory information for each denomination of money being stored in each cash handling apparatus.

In the above invention, the registration apparatus does not handle cash.

In the above invention, the registration apparatus includes an electronic payment processing unit configured to process the transaction amount by electronic payment at the time of the transaction with the customer.

The present invention also provides a settlement method for performing a settlement for a monetary amount of a transaction when the transaction is performed with a customer in a store, and the settlement method includes: registering, by a registration apparatus installed in the store, transaction information including a transaction amount of the transaction at the time of the transaction with the customer; receiving, by a cash handling apparatus installed outside the store, cash for a payment process of the transaction amount that is included in the transaction information of the customer registered by the registration apparatus and identified for the payment process; and performing a checking process for indicating that the payment process on the transaction information has been completed.

### ADVANTAGEOUS EFFECTS OF THE INVENTION

According to the present invention, when a transaction with a customer is performed in a store, cash equivalent to a monetary amount of the transaction registered by the registration apparatus in the store is deposited into the cash handling apparatus outside the store, whereby the transaction can be established. The store can perform a transaction with a customer who requests cash payment, without managing cash for transactions with customers.

### BRIEF DESCRIPTION OF THE DRAWINGS

[FIG. 1] FIG. 1 is a schematic diagram for illustrating an outline of a settlement system according to an embodiment.
[FIG. 2] FIG. 2 is a block diagram showing a configuration example of the settlement system.
[FIG. 3] FIG. 3 is a schematic diagram showing an example of a settlement system installed in a shopping mall.
[FIG. 4] FIG. 4 illustrates an example of transaction information.
[FIG. 5] FIG. 5 is a flowchart showing the flow of processing performed in the settlement system.

### DESCRIPTION OF EMBODIMENTS

Hereinafter, an embodiment of the settlement system and the settlement method according to the present invention will be described with reference to the accompanying drawings. A settlement system according to the present embodiment can be used by a store, which usually performs transactions by electronic payment, to perform a transaction by cash payment. In the present embodiment, cash payment refers to a settlement method in which, when performing a transaction between a store and a customer, the customer pays a monetary amount for an item or service (monetary amount of the transaction) by cash to the store. Meanwhile, electronic payment refers to a settlement method in which the customer pays the monetary amount by a method using a medium other than cash. The electronic payment includes payment using computerized payment methods in which monetary amount information is exchanged. The electronic payment includes payment by computerized money which is electronic data having the same value as cash. Examples of the payment using computerized payment methods include electronic payment by a credit card. Examples of the payment by computerized money include electronic payment using electronic money. For example, in the electronic payment by electronic money, the monetary amount is paid by using a prepaid card or a smartphone.

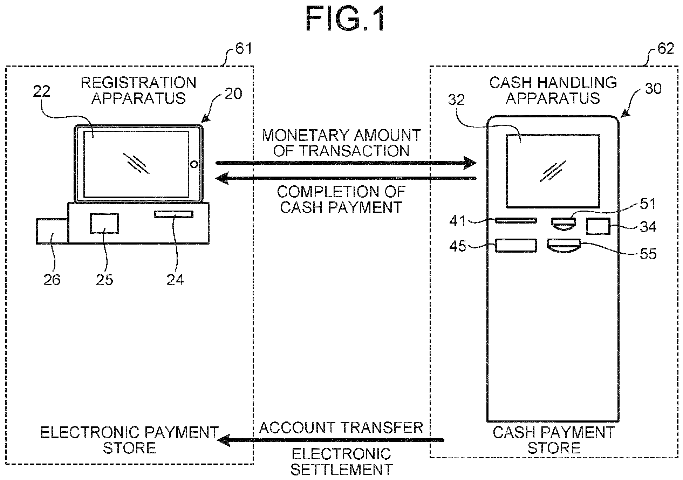

FIG. 1 is a schematic diagram for illustrating an outline of the settlement system according to the present embodiment. The settlement system includes a registration apparatus 20 and a cash handling apparatus 30. The registration apparatus 20 is installed in a store 61 which does not prepare cash for transactions with customers. The store 61 usually performs a transaction with a customer by electronic payment without receiving cash from the customer. The cash handling apparatus 30 is installed outside the store 61. The installation location of the cash handling apparatus 30 is not limited to the vicinity of the store 61 and may be a remote location. As an example, a case where the cash handling apparatus 30 is instated in another store 62 which performs transactions by cash payment will be described.

As shown in FIG. 1, the registration apparatus 20 includes an operation/display unit 22, a printer 24, a barcode reader 25, and an electronic payment processing unit 26. The cash handling apparatus 30 includes an operation/display unit 32, a banknote receiving unit 41, a banknote dispensing unit 45, a coin receiving unit 51, a coin dispensing unit 55, and a barcode reader 34. These apparatus components will be described in detail later.

The registration apparatus 20 can execute electronic payment for a transaction with a customer. For example, a clerk of the store 61 operates the touch panel type operation/display unit 22 to input information about an item to be purchased by the customer. Upon receiving this information, the registration apparatus 20 calculates a monetary amount of the transaction to be paid by the customer to the store 61 for purchasing the item in the store 61. The method for registering the information about the item and calculating the monetary amount for purchasing the item can be realized by a conventional art such as a POS system. For example, the customer holds a card for electronic payment or a smartphone for electronic payment, over the electronic payment processing unit 26. The registration apparatus 20 acquires information for the electronic payment from the card or the smartphone through the electronic payment processing unit 26. The registration apparatus 20 executes a process for the electronic settlement by communicating with an electronic payment server not shown in FIG. 1. The electronic payment is performed based on the monetary amount of the transaction and the information acquired by the electronic payment processing unit 26. The customer who has paid the monetary amount for purchasing the item by the electronic payment can receive the purchased item at that place and take the item home.

In a case where a customer of the store 61 requests cash payment, the registration of item information and the calculation of a monetary amount of a transaction are performed by using the registration apparatus 20 in the same way as in the case of electronic payment. The settlement system associates the information obtained by the registration apparatus 20, with a transaction number (transaction ID) for identifying each transaction, and manages the information as transaction information. The transaction information includes a monetary amount of each transaction. The management of the transaction information by the settlement system may be performed by the registration apparatus 20, or may be performed by the cash handling apparatus 30. Alternatively, the management of the transaction information may be performed by a management apparatus connected to the registration apparatus 20 and the cash handling apparatus 30. The management by using the management apparatus will be described later.

The registration apparatus 20 uses the printer 24 to issue a receipt for cash payment. A barcode, into which identification information for identifying the store 61 and a transaction number are encoded, is printed on the receipt. The customer receives the receipt and moves to the installation location of the cash handling apparatus 30 with the item left in the store 61, without paying the monetary amount of the item in the store 61. The item is managed in the store 61 with the transaction number assigned thereto.

The customer moves to the store 62 in which the cash handling apparatus 30 is installed. The customer deposits cash equivalent to the monetary amount for purchasing the item (monetary amount of the transaction) to be paid to the store 61, into the cash handling apparatus 30 in the store 62. Specifically, the customer causes the barcode reader 34 of the cash handling apparatus 30 to read the barcode on the receipt issued in the store 61. The cash handling apparatus 30 identifies the store 61 and the transaction number from the information included in the barcode. The cash handling apparatus 30 refers to the transaction information of the store 61 managed in the settlement system to identify the transaction amount being managed in association with the transaction number obtained from the barcode. The cash handling apparatus 30 performs a depositing process to receive cash equivalent to the identified transaction amount. That is, the cash handling apparatus 30 executes a process for cash payment in which the customer pays the transaction amount by cash. After the customer deposited cash into the cash handling apparatus 30 and the depositing process is completed, the settlement system updates the transaction information such that it can be recognized that the cash payment (payment process) has been completed. The customer who has completed the payment process by using the cash handling apparatus 30 returns to the store 61 with the receipt.

In the store 61, the customer who has completed the payment process by cash payment causes the barcode reader 25 of the registration apparatus 20 to read the barcode on the receipt. The registration apparatus 20 identifies the transaction number from the barcode. The registration apparatus 20 refers to the transaction information of the store 61 managed in the settlement system to confirm whether or not the depositing process has been performed in the cash handling apparatus 30, that is, the payment process of the transaction amount has been completed. The registration apparatus 20 displays the confirmation result on the operation/display unit 22. If the clerk of the store 61 can confirm, based on the displayed information on the operation/display unit 22, that the customer has already deposited the cash equivalent to the transaction amount into the cash handling apparatus 30, the clerk of the store 61 hands over the item, which has been kept in the store 61 after purchased by the customer, to the customer to complete the transaction. After the transaction is completed, the settlement system updates the transaction information such that it can be recognized that the item has been handed to the customer.

When a transaction with a customer who requests cash payment is performed in the store 61, money, which should be received by the store 61 for an item purchased by the customer in the store 61, is deposited into the cash handling apparatus 30 of the other store 62. The store 62 has the right of ownership of cash deposited into the cash handling apparatus 30. Therefore, it is necessary to perform a remittance process for returning, from the store 62 to the store 61, a monetary amount corresponding to the money deposited into the cash handling apparatus 30 for the item purchased in the store 61. For example, the store 62 deducts a predetermined usage fee, which is charged by the store 62, from the amount of the money deposited into the cash handling apparatus 30 for the transaction in the store 61, and transfers the remaining monetary amount to the store 61. The remittance from the store 62 to the store 61 can be performed by transfer the remaining amount into an account of the store 61 in a financial institution. Alternatively, the remittance from the store 62 to the store 61 can be performed by electronic payment. For example, the store 62 performs the remittance to the store 61 by executing electronic payment on the internet. For another example, a clerk of the store 62 performs the remittance to the store 61 by electronic payment that is executed by using a card or a smartphone owned by the store 62 and the registration apparatus 20 in the store 61. After the remittance process is completed, the settlement system updates the transaction information such that it can be recognized that the remittance process has been completed.

When the settlement system is used as described above, it is possible to perform a cash transaction between the store 61, which does not have cash prepared for transactions with customers, and the customers. The store 61 can reduce the cost for cash management since it is not necessary to prepare cash for returning change to customers and transport proceeds from sales to a financial institution. The store 62 which has the cash handling apparatus 30 can obtain a fee from the store 61 when the cash handling apparatus 30 is used for a transaction of the store 61.

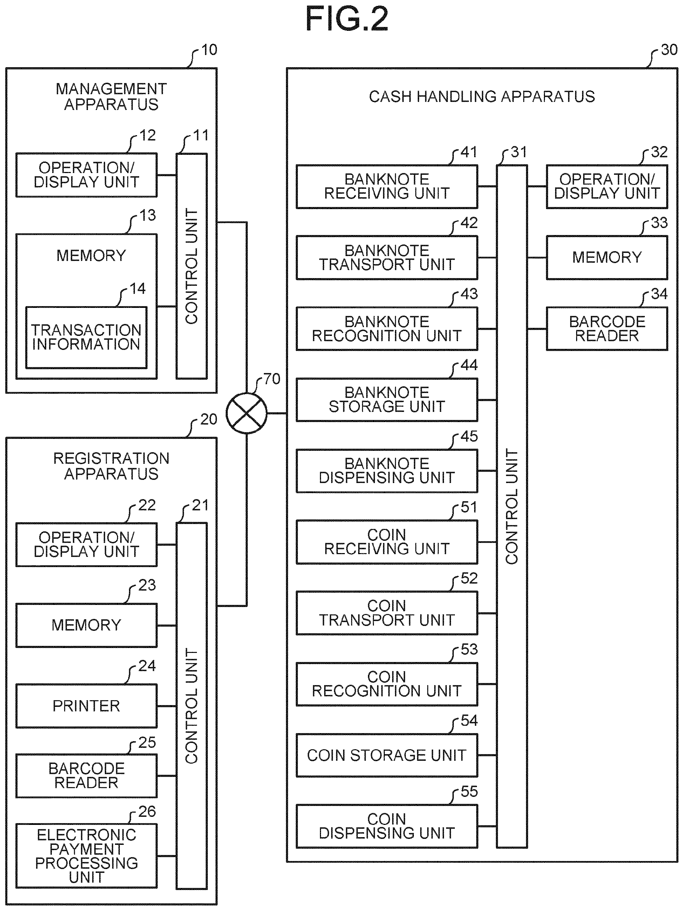

Next, a configuration example of the settlement system will be described. FIG. 2 is a block diagram showing the configuration example of the settlement system. The settlement system shown in FIG. 2 includes a management apparatus 10, the registration apparatus 20, and the cash handling apparatus 30. The management apparatus 10 is communicably connected to the registration apparatus 20 and the cash handling apparatus 30 via a network 70. The management apparatus 10 executes the management and update of the transaction information, and remittance between stores by account transfer or electronic payment, as described with reference to FIG. 1.

FIG. 2 shows an example of the minimum configuration. The settlement system can have a configuration including a plurality of registration apparatuses 20 and a plurality of cash handling apparatuses 30. The registration apparatus 20 is configured to be able to transmit and receive information to and from the electronic payment server not shown in FIG. 2 to execute electronic payment.

As shown in FIG. 2, the management apparatus 10 includes a control unit 11, an operation/display unit 12, and a memory 13. The management apparatus 10 may be, for example, a computer apparatus. The operation/display unit 12 may be a touch panel type liquid crystal display device. The operation/display unit 12 serves as an operation unit for inputting various kinds of information into the management apparatus 10. In addition, the operation/display unit 12 serves as a display unit for displaying various kinds of information. The memory 13 is a nonvolatile storage device. The memory 13 stores therein information required for operation of the management apparatus 10. The information stored in the memory 13 includes transaction information 14. The control unit 11 can control each component based on information received via the network 70 and information inputted via the operation/display unit 12. The control unit 11 controls each component while using the information stored in the memory 13, thereby realizing the functions of the management apparatus 10 described in the present embodiment.

As shown in FIG. 2, the registration apparatus 20 whose appearance example is shown in FIG. 1 includes a control unit 21, the operation/display unit 22, a memory 23, the printer 24, the barcode reader 25, and the electronic payment processing unit 26. The operation/display unit 22 may be a touch panel type liquid crystal display device. The operation/display unit 22 serves as an operation unit for inputting various kinds of information into the registration apparatus 20. In addition, the operation/display unit 22 serves as a display unit for displaying various kinds of information. The memory 23 is a nonvolatile storage device. The memory 23 stores therein information required for operation of the registration apparatus 20.

The printer 24 can print a receipt. A barcode including information for identifying a transaction amount is printed on the receipt. The barcode reader 25 is used for reading the barcode printed on the receipt. In addition, the barcode reader 25 is used for reading a barcode attached to an item. The price of each item can be identified, based on a barcode read from each item by the barcode reader 25, to calculate a monetary amount to be paid by the customer. For example, the POS system is used for identifying a price of each item and calculating a monetary amount for purchasing the items. The POS system is a conventional technique, and thus the detailed description thereof is omitted.

The electronic payment processing unit 26 can read information required for electronic payment. For example, when the electronic payment is performed by using a credit card, the electronic payment processing unit 26 reads information required for the electronic payment from the credit card. For another example, when the electronic payment is performed by using a smartphone, the electronic payment processing unit 26 reads information required for the electronic payment from the smartphone. The type of electronic payment is not particularly limited, and the registration apparatus 20 includes the electronic payment processing unit 26 corresponding to the type of electronic payment. The method for electronic payment is a conventional technique, and thus the detailed description thereof is omitted.

The control unit 21 can control each component based on information received via the network 70 and information inputted through the operation/display unit 22, the barcode reader 25, and the electronic payment processing unit 26. The control unit 11 controls each component while using the information stored in the memory 13, thereby realizing the functions of the registration apparatus 20 described in the present embodiment.

As shown in FIG. 2, the cash handling apparatus 30 whose appearance example is shown in FIG. 1 includes a control unit 31, the operation/display unit 32, a memory 33, and the barcode reader 34. The cash handling apparatus 30 also includes the banknote receiving unit 41 a banknote transport unit 42, a banknote recognition unit 43, a banknote storage unit 44, and the banknote dispensing unit 45, for handling banknotes. The cash handling apparatus 30 further includes the coin receiving unit 51, a coin transport unit 52, a coin recognition unit 53, a coin storage unit 54, and the coin dispensing unit 55, for handling coins.

The operation/display unit 32 may be a touch panel type liquid crystal display device. The operation/display unit 32 serves as an operation unit for inputting various kinds of information into the registration apparatus 20. In addition, the operation/display unit 32 serves as a display unit for displaying various kinds of information. The memory 33 is a nonvolatile storage device. The memory 33 stores therein information required for operation of the cash handling apparatus 30. For example, denominations of banknotes and the number of banknotes for each denomination stored in the banknote storage unit 44, and denominations of coins and the number of coins for each denomination stored in the coin storage unit 54 are managed as inventory information in the memory 33. The barcode reader 34 is used for reading a barcode printed on a receipt by the printer 24 of the registration apparatus 20.

The type of barcodes, which can be read by the barcode reader 25 of the registration apparatus 20 and the barcode reader 34 of the cash handling apparatus 30, corresponds to the type of barcodes which can be printed on receipts by the printer 24 of the registration apparatus 20. The type of barcodes is not particularly limited. For example, information may be encoded into a one-dimensional barcode or may be encoded into a two-dimensional barcode.

The cash handling apparatus 30 executes a payment process of receiving cash equivalent to a monetary amount of the transaction from a customer who requests a transaction by cash payment. The customer can pay a transaction amount for purchasing an item by cash, by starting a depositing process in the cash handling apparatus 30. In the depositing process, the customer can deposit banknotes through the banknote receiving unit 41, and deposit coins through the coin receiving unit 51.

In the depositing process, the cash handling apparatus 30 feeds the banknotes received by the banknote receiving unit 41 into inside the cash handling apparatus 30. The banknote transport unit 42 transports the banknotes fed into the cash handling apparatus 30, one by one. The banknote recognition unit 43 recognizes and counts each banknote being transported. The banknote storage unit 44 sorts and stores therein the recognized and counted banknotes by denomination. In addition, the cash handling apparatus 30 feeds the coins received by the coin receiving unit 51 into inside the cash handling apparatus 30. The coin transport unit 52 transports the coins fed into the cash handling apparatus 30, one by one. The coin recognition unit 53 recognizes and counts each coin being transported. The coin storage unit 54 sorts and stores therein the recognized and counted coins by denomination.

When the total monetary amount of the banknotes received by the banknote receiving unit 41 and the coins received by the coin receiving unit 51 from the customer exceeds the monetary amount of the transaction, the cash handling apparatus 30 executes a dispensing process of dispensing change. In the dispensing process, the cash handling apparatus 30 can feed out banknotes to be dispensed, from the banknote storage unit 44. The banknote transport unit 42 transports and discharges the fed-out banknotes one by one to the banknote dispensing unit 45. In addition, the cash handling apparatus 30 can feed out coins to be dispensed, from the coin storage unit 54. The coin transport unit 52 transports and discharges the fed-out coins one by one to the coin dispensing unit 55. The cash handling apparatus 30 can return the change to the customer by the banknotes discharged from the banknote dispensing unit 45 and the coins discharged from the coin dispensing unit 55.

Next, a specific usage example of the settlement system will be described. The settlement system can be used in various places where a payment process for a monetary amount of a transaction is performed by electronic payment and cash payment. The method for using the settlement system will be described with an example in which a settlement system is installed in a shopping mall including a plurality of stores.

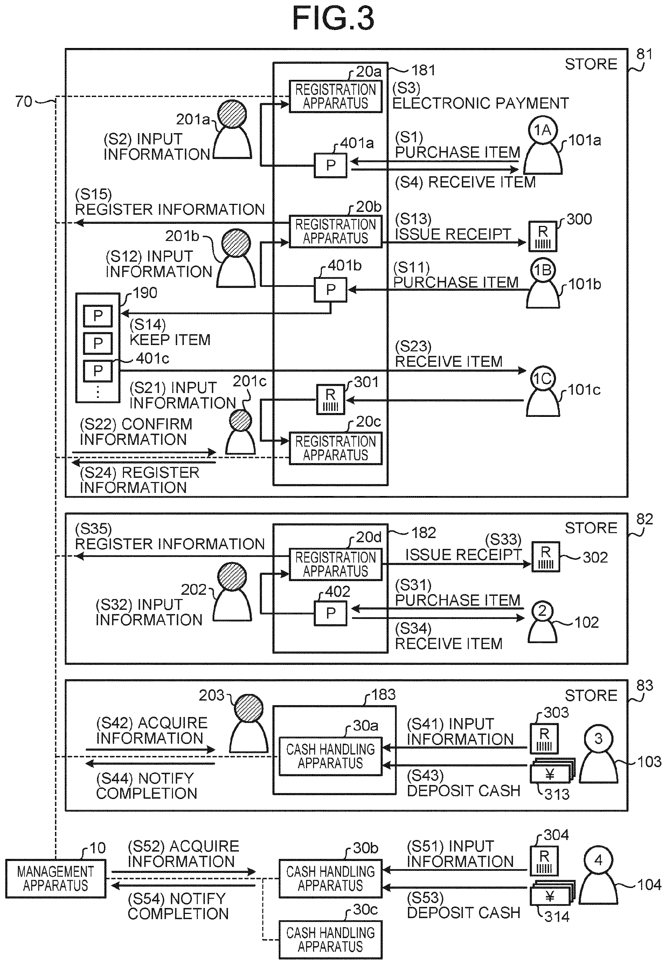

FIG. 3 is a schematic diagram showing an example of the settlement system installed in the shopping mall. As shown in FIG. 3, the settlement system includes a management apparatus 10, a plurality of registration apparatuses 20 (20a to 20d), and a plurality of cash handling apparatuses 30 (30a to 30c). As shown by a broken line in FIG. 3, the management apparatus 10 is communicably connected to each registration apparatus 20 and each cash handling apparatus 30 via a network 70.

In the shopping mall, there are a plurality of stores 81 to 83. In the shopping mall, the management apparatus 10 and a plurality of the cash handling apparatuses 30a and 30b are installed outside the stores 81 to 83.

Counters 181 to 183 are installed in the stores 81 to 83, respectively. In the store 81, a plurality of clerks 201 (201a to 201c) respond to a plurality of customers 101 (101a to 101c) by using a plurality of the registration apparatuses 20 (20a to 20c) installed at the counter 181. In the store 82, a clerk 202 responds to a customer 102 by using the registration apparatus 20d installed at the counter 182. In the store 83, a clerk 203 responds to a customer 103 by using the cash handling apparatus 30a installed at the counter 183.

The store 81 can perform both transactions by electronic payment and transactions by cash payment, by using the registration apparatus 20. When the customer 101a shown in FIG. 3 requests to purchase an item 401a by electronic payment (step S1), the clerk 201a inputs information about the item 401a into the registration apparatus 20a by operating the operation/display unit 22 and the barcode reader 25 (step S2). The registration apparatus 20 calculates a monetary amount for purchasing the item 401a (monetary amount of the transaction) based on the inputted information. The customer holds a card or a smartphone over the electronic payment processing unit 26 for electronic payment. The registration apparatus 20 acquires information for electronic payment through the electronic payment processing unit 26. The registration apparatus 20 executes electronic payment by communicating with an electronic payment server not shown in FIG. 3, based on the transaction amount and the information acquired for the electronic payment (step S3). The customer 101a can receive the item 401a at that place (step S4) immediately after completing the electronic payment in which the customer 101a pays the transaction amount.

When the customer 101b shown in FIG. 3 requests to purchase an item 401b by cash payment (step S11), the clerk 201b inputs information about the item 401b into the registration apparatus 20b by operating the operation/display unit 22 and the barcode reader 25 (step S12). The registration apparatus 20b calculates a monetary amount for purchasing the item 401b, that is, a monetary amount of the transaction, based on the inputted information. When the customer 101b purchases a plurality of items, a monetary amount of the transaction is calculated based on a total amount of prices of the respective items. The registration apparatus 20b generates a transaction ID for identifying this transaction. The registration apparatus 20b issues a receipt 300 by using the printer 24 (step S13). A barcode, into which the transaction ID and a store ID for identifying the store 81 are encoded, is printed on the receipt 300. The customer 101b receives the receipt 300 and goes out of the store 81 with the receipt 300 while the item 401b is left with the clerk 201b. The customer 101b moves to the installation location of the cash handling apparatus 30 in order to perform a payment process of the transaction amount that is the monetary amount for purchasing the item 401b.

The clerk 201b keeps the item 401b to be purchased by the customer 101b, on a shelf 190 (step S14). The item 401b is managed based on the transaction ID which has been generated for the transaction with the customer 101b. The registration apparatus 20b registers the store ID, the transaction ID, and the transaction amount in the transaction information 14 which is being managed in the memory 13 of the management apparatus 10 (step S15).

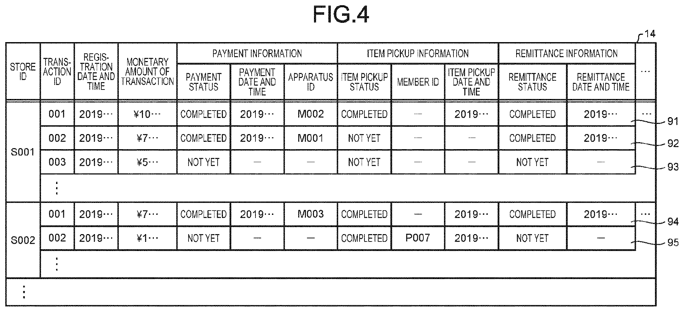

FIG. 4 illustrates an example of the transaction information 14. As shown in FIG. 4, the transaction information 14 includes a store ID, a transaction ID, registration date and time, a transaction amount, payment information, item pickup information, and remittance information.

The store ID is identification information for identifying each of the stores 81 to 83. The transaction ID is identification information for identifying each of transactions performed in the respective stores 81 to 83. A store in which a customer has purchased an item, and a transaction performed by the customer in the store can be identified based on the store ID and the transaction ID. The registration date and time indicates the date and time when information was registered in the transaction information 14 by the registration apparatus 20. The transaction amount indicates a monetary amount for purchasing an item calculated by the registration apparatus 20 at the time of a transaction in which a customer purchases the item in the store.

The payment information includes a payment status, payment date and time, and an apparatus ID. The payment status is information indicating whether or not cash payment, which is a payment process for paying the transaction amount by cash, is completed by using the cash handling apparatus 30. The payment date and time indicates the date and time when the cash payment, which is a depositing process of the transaction amount, was performed by the cash handling apparatus 30. The apparatus ID indicates the identification information of the cash handling apparatus 30 by which the cash payment has been performed. The cash handling apparatus 30, into which cash has been deposited by the customer, can be identified by the apparatus ID.

The item pickup information includes an item pickup status, a member ID, and item pickup date and time. The item pickup status is information indicating whether or not the item has been picked up by the customer. The member ID is information indicating whether or not the customer who performed the transaction is a member of the store, which will be described in detail later. The item pickup date and time indicates the date and time when the customer picked up the item at the store.

The remittance information includes a remittance status, and remittance date and time. The remittance status is information indicating whether or not a remittance to the store, in which the transaction was performed, has been completed after the transaction amount of cash was deposited into the cash handling apparatus 30. The remittance date and time indicates the date and the time when the remittance process was performed. The remittance process will be described in detail later.

For example, information 93 of a store ID "S001" and a transaction ID "003" shown in FIG. 4 indicates a state where a store ID, a transaction ID, and a transaction amount have been registered in the transaction information 14 by the registration apparatus 20. In the information 93, the payment status is registered as "not yet" since cash payment has not been performed. The item pickup status is also "not yet" since an item purchased by a customer has been managed in the store and the customer has not picked up the item being kept in the store.

A customer who requests a transaction by cash payment in the store 81 can perform the cash payment by using any of the plurality of cash handling apparatuses 30a to 30c. As shown in FIG. 3, when a customer 104 performs the cash payment by using the cash handling apparatus 30b, the customer 104 holds a receipt 304, which has been issued in the store 81 at the time of a transaction and includes a barcode, over the barcode reader 34 to input a store ID and a transaction ID into the cash handling apparatus 30b (step S51). The cash handling apparatus 30b obtains the store ID and the transaction ID from the barcode on the receipt 304. The cash handling apparatus 30b transmits the store ID and the transaction ID to the management apparatus 10. The management apparatus 10 refers to the transaction information 14 shown in FIG. 4, based on the store ID and transaction ID received from the cash handling apparatus 30b. The management apparatus 10 identifies the transaction amount to be paid by the customer 104, and transmits the identified transaction amount to the cash handling apparatus 30b. Upon receiving the transaction amount to be deposited by the customer 104 (step S52 in FIG. 3), the cash handling apparatus 30b displays the transaction amount on the operation/display unit 32 to accept depositing of cash. The customer 104 deposits cash equivalent to the transaction amount, into the cash handling apparatus 30b (step S53), and completes the cash payment that is the payment process for paying the transaction amount by cash. The cash handling apparatus 30b notifies the management apparatus 10 that the cash payment has been completed (step S54). In a case where a customer uses the cash handling apparatus 30c for the cash payment, the cash payment is performed in the same way as shown in steps S51 to S54.

The management apparatus 10 that has received the notification of cash payment completion from the cash handling apparatus 30 updates the transaction information 14. For example, information 92 of the store ID "S001" and a transaction ID "002" shown in FIG. 4 indicates a state where the cash payment has been completed. After completing the cash payment, the payment status is updated from "not yet" to "completed". In addition, the date and time of the cash payment is registered as the payment date and time, and the identification information of the cash handling apparatus 30 by which the cash payment has been performed is registered as the apparatus ID. In the information 92, the item pickup status remains "not yet" since the item is still kept in the store and has not been picked up by the customer.

A customer who has completed cash payment by using the cash handling apparatus 30 can receive an item kept in a store. For example, the customer 101c, who has purchased an item and has received a receipt 301 in the store 81 and has completed cash payment by using the cash handling apparatus 30, passes the receipt 301 to the clerk 201c. As shown in FIG. 3, the clerk 201c holds a barcode on the receipt 301, over the barcode reader 25 to input a store ID and a transaction ID into the registration apparatus 20c (step S21). The registration apparatus 20c obtains the store ID and the transaction ID from the barcode on the receipt 301, and transmits the store ID and the transaction ID to the management apparatus 10. The management apparatus 10 refers to the transaction information 14 shown in FIG. 4, based on the received store ID and transaction ID. The management apparatus 10 identifies the payment status of the customer 101c, and transmits the payment status of the customer 101c to the registration apparatus 20c. The registration apparatus 20c displays the payment status of the customer 101c obtained by inquiring to the management apparatus 10, on the operation/display unit 22 (step S22). The store clerk 22 confirms, based on information displayed on the operation/display unit 22, that the payment status of the customer 101c is "completed", that is, the customer 101c has completed the cash payment which is a payment process of the transaction amount. After the confirmation, the clerk 201c hands over an item 401c, which was purchased by the customer 101c and kept on the shelf 190, to the customer 101c. As described above, after the customer 101c performed the cash payment and completed the payment of the monetary amount for purchasing the item, the customer 10 can receive the item 401c (step S23). After the clerk 201c handed the item to the customer 101c, the clerk 201c performs an operation for indicating that the customer 101c has picked up the item from the store 81, by using the operation/display unit 22 of the registration apparatus 20c. In response to this operation, the registration apparatus 20c updates the item pickup information in the transaction information 14 (step S24).

For example, information 91 of the store ID "S001" and a transaction ID "001" shown in FIG. 4 indicates a state where an item pickup has been completed. After completing the pickup of the item, the item pickup status is updated from "not yet" to "completed". In addition, the date and time when the management apparatus 10 received the information indicating the completion of the item pickup is registered as the item pickup date and time.

The store 81 manages items purchased by customers on the shelf 190, and an item of the shelf 190 is handed to a customer for which a clerk confirmed that the cash payment is completed. The store 81 can cancel a transaction if the cash payment is not performed within a predetermined time period. For example, if the cash payment is not performed during the opening hours of the store 81, the store 81 cancels a transaction. It is possible to confirm whether or not the cash payment has been completed, by operating the operation/display unit 22 of the registration apparatus 20 to display the transaction information 14 thereon. Also, the store 81 can set a time period for the cash payment. When the time period is set, the management apparatus 10 confirms whether or not the cash payment is completed within the time period. The confirmation is performed at a predetermined timing after the time period has elapsed from the transaction in the store 81. The management apparatus 10 notifies the registration apparatus 20 in the store 81 of information on the confirmation result of the transaction. In this case, the registration apparatus 20 that has received the notification from the management apparatus 10 notifies a clerk of the information about the transaction for which the cash payment has not been performed, by display on the operation/display unit 22. The clerk who has received the notification can cancel the transaction for which the cash payment has not been performed, and can execute predetermined post-processing for the transaction. For example, the clerk returns an item kept on the shelf 190, to an item shelf in the store 81. For example, a person in charge of the shopping mall operates the operation/display unit 12 of the management apparatus 10 to prepare each setting on the time period. When a transaction is cancelled, the transaction information 141 is updated such that cash payment of the cancelled transaction cannot be executed with the cash handling apparatus 30.

Similar to the store 81, the store 82 shown in FIG. 3 manages an item therein until cash payment is completed. In the store 82, if a customer who requests cash payment is a member of the store 82, the store 82 can hand over the item to the customer before the cash payment is performed. For example, at a timing when transaction information is registered by the registration apparatus 20, the item is handed to the customer.

Specifically, when the customer 102 who is a member of the store 82 requests to purchase an item 402 by cash payment (step S31), the clerk 202 inputs information about the item 402 and the membership number of the customer 102 into the registration apparatus 20d by operating the operation/display unit 22 and the barcode reader 25 (step S32). For example, the clerk 202 operates the operation/display unit 22 to input the membership number. For another example, the clerk 202 reads a barcode on a member's card, into which the membership number is encoded, by the barcode reader 25 to input the membership number. The registration apparatus 20d issues a receipt 302 by using the printer 24 (step S33). A barcode, into which the store ID of the store 82 and a transaction ID generated by the registration apparatus 20d are encoded, is printed on the receipt 302. The clerk 202 hands over the item 402 to the customer 102. The customer 102, who is a member of the store 82, can receive the item 402 together with the receipt 302 at that place (step S34). The customer 102 receives the item and goes out of the store 82 to perform cash payment by using the cash handling apparatus 30.

The registration apparatus 20d registers the store ID, the transaction ID, a monetary amount of the transaction, and the membership number in the transaction information 14 managed in the memory 13 of the management apparatus 10 (step S35). For example, information 95 of a store ID "S002" and a transaction ID "002" shown in FIG. 4 indicates a state where the registration apparatus 20 has registered information regarding a transaction with the member customer 102 in the transaction information 14. Since cash payment for the transaction amount has not been performed, the payment status is registered as "not yet", but the item 402 has already been handed to the member customer 102. Therefore, in the item pickup information, a membership number "P007" of the member customer 102 is registered as the member ID, and a status "completed" is registered as the item pickup status. When the member customer 102 completes the cash payment by using the cash handling apparatus 30, the payment information of the transaction information 14 is updated and the transaction is completed. The member customer 102, who has completed the cash payment, does not need to return to the store 82 since the member customer 102 has already received the item 402 in the store 82.

The store 82 manages member information based on a membership number that is assigned to each member to identify each of members of the store. The member information includes the name and contact information of each member. The store 82 can identify a customer by referring to the member information based on a membership number. If a member customer, who requested cash payment and received an item in the store 82, has not performed cash payment within a predetermined time period, the store 82 can identify the customer based on the member information and ask the customer to pay for the item. It is possible to confirm whether or not the cash payment has been completed, by operating the operation/display unit 22 of the registration apparatus 20 to display the transaction information 14 thereon. Also, the store 82 can set a time period for the cash payment. When the time period is set, the management apparatus 10 identifies a transaction for which the cash payment has not been performed within the time period, and notifies the registration apparatus 20d in the store 82 of information about the identified transaction. In this case, the registration apparatus 20d that has received the notification from the management apparatus 10 notifies a clerk of the information about the transaction for which the cash payment has not been performed, by display of the operation/display unit 22. The clerk who has received the notification can execute predetermined post-processing for the transaction for which the cash payment has not been performed. For example, the clerk contacts the member customer to determine a method of payment of the transaction amount and a method for handling the item. For example, a person in charge of the shopping mall operates the operation/display unit 12 of the management apparatus 10 to prepare each setting.

The cash handling apparatus 30b and the cash handling apparatus 30c shown in FIG. 3 are managed by the shopping mall. Customers of the stores 81 and 82 can perform cash payment by using the cash handling apparatus 30b and the cash handling apparatus 30c. The customers of the stores 81 and 82 can also perform the cash payment by using the cash handling apparatus 30a in the other store 83.

The store 83 performs a transaction by cash payment, using the cash handling apparatus 30a. The clerk 203 of the store 83 receives cash for purchasing an item from a customer. The cash is deposited into the cash handling apparatus 30a. The clerk 203 can dispense change from the cash handling apparatus 30a and returns the change to the customer according to need.

When the customer 103, who purchased an item and received a receipt 303 in the store 81 or the store 82, visits the store 83 and asks for cash payment for the transaction printed on the receipt 303, the clerk 203 of the store 83 holds a barcode on the receipt 303, over the barcode reader 34 to input a store ID and a transaction ID into the cash handling apparatus 30a (step S41). The cash handling apparatus 30a obtains the store ID and the transaction ID obtained from the barcode on the receipt 303, and transmits the store ID and the transaction ID to the management apparatus 10. The management apparatus 10 refers to the transaction information 14 shown in FIG. 4, based on the received store ID and transaction ID, identifies the transaction amount to be paid by the customer 103, and transmits the transaction amount to the cash handling apparatus 30a. Upon acquiring the transaction amount to be deposited by the customer 103 (step S42 in FIG. 3), the cash handling apparatus 30a displays the transaction amount on the operation/display unit 32 and accepts depositing of cash. The clerk 203 receives cash equivalent to the transaction amount from the customer 103, and deposits the cash into the cash handling apparatus 30a (step S43). After the depositing process has been completed, the cash handling apparatus 30a notifies the management apparatus 10 that the cash payment, that is, a payment process by cash, has been completed (step S44). The management apparatus 10 that has received the notification updates the payment information in the transaction information 14 to a state indicating the completion of the cash payment. The customer 103 who has completed the cash payment goes out of the store 83 with the receipt 303. The customer 103 returns to the store 81 or the store 82 in which the item has been kept for the customer 103, shows the receipt 303, and receives the item, thereby completing the transaction. If the customer 103 is a member customer of the store 82 and has already received the item in the store 82, the transaction is completed by performing the cash payment in the store 83.

When a customer performed a transaction in the store 81 and cash payment for a monetary amount of the transaction by using the cash handling apparatus 30b or 30c in the shopping mall, the management apparatus 10 executes a remittance process. In the remittance process, a monetary amount remaining after deducting a fee charged by the shopping mall from the monetary amount of the transaction, is transferred from the shopping mall to the store 81. In the same way as those described above, when a customer performed a transaction in the store 82 and cash payment by using the cash handling apparatus 30b or 30c, the management apparatus 10 executes a remittance process of transferring a monetary amount calculated by deducting a fee from a monetary amount of the transaction, from the shopping mall to the store 82. When a customer performed a transaction in the store 81 and cash payment by using the cash handling apparatus 30a in the store 83, the management apparatus 10 executes a remittance process of transferring a monetary amount remaining after deducting a fee charged by the store 83 from a monetary amount of the transaction, from the store 83 to the store 81. In the same way as those described above, when a customer performed a transaction in the store 82 and cash payment by using the cash handling apparatus 30a, the management apparatus 10 executes a remittance process of transferring a monetary amount calculated by deducting a fee from a monetary amount of the transaction, from the store 83 to the store 82. Since the remittance process between stores is performed in the same manner, the remittance process for transferring money from the shopping mall to the store 81 will be described, as an example.

The remittance process can be performed by using an account in a financial institution. Information about an account of the shopping mall in a financial institution and information about an account of the store 81 in a financial institution are registered in the management apparatus 10 in advance. The management apparatus 10 manages the registered information about the accounts, in the memory 13.

For example, each time cash payment for the store 81 is performed by using the cash handling apparatus 30b or 30c, the management apparatus 10 transfers a monetary amount remaining after deducting a fee paid to the shopping mall from a transaction amount, from the account of the shopping mall to the account of the store 81. For another example, after the shopping mall is closed, the management apparatus 10 transfers a monetary amount remaining after deducting a fee paid to the shopping mall from a total of transaction amounts of the store 81 deposited into the cash handling apparatuses 30a and 30b during opening hours of the shopping mall, from the account of the shopping mall to the account of the store 81. The timing of the remittance and the monetary amount of the fee can be changed by setting. The settings of the remittance timing and the fee are managed in the memory 13. The settings of the remittance timing and the fee may be different for each store. For example, the person in charge of the shopping mall operates the operation/display unit 12 of the management apparatus 10 to prepare the settings.

Alternatively, the remittance process can be performed by using electronic payment. Information about the shopping mall required for the electronic payment and information about the store 81 required for the electronic payment are registered in the management apparatus 10 in advance. The management apparatus 10 manages the registered information in the memory 13.

For example, each time cash payment for the store 81 is performed with the cash handling apparatus 30b or 30c, the management apparatus 10 executes electronic payment in which a monetary amount remaining after deducting the fee from a transaction amount is paid from the shopping mall to the store 81. For another example, after the shopping mall is closed, the management apparatus 10 executes electronic payment in which a monetary amount remaining after deducting the fee from a total of transaction amounts of the store 81 deposited into the cash handling apparatuses 30a and 30b during opening hours of the shopping mall is paid from the shopping mall to the store 81. The timing of execution of the electronic payment and the monetary amount of the fee can be changed by setting. The settings of the timing of execution of the electronic payment and the fee are managed in the memory 13. The settings of the timing of execution of electronic payment and the fee may be different for each store. For example, the person in charge of the shopping mall operates the operation/display unit 12 of the management apparatus 10 to prepare the settings.

The management apparatus 10 that has performed a remittance process by account transfer or electronic payment registers remittance information in the transaction information 14 managed in the memory 13. For example, information 94 of the store ID "S002" and a transaction ID "001" shown in FIG. 4 indicates a state where the management apparatus 10 has registered remittance information in the transaction information 14. After completing a remittance process, the remittance status is updated from "not yet" to "completed". In addition, the date and time when the remittance process was performed is registered as the remittance date and time. The person in charge of the shopping mall can confirm the remittance information registered in the transaction information 14, by operating the operation/display unit 12 of the management apparatus 10 or the operation/display unit 32 of the cash handling apparatus 30b or 30c. The clerk of the store 81 and the clerk of the store 82 can confirm the remittance information registered in the transaction information 14, by operating the operation/display unit 22 of the registration apparatus 20. The clerk of the store 83 can confirm the remittance information registered in the transaction information 14, by operating the operation/display unit 32 of the cash handling apparatus 30a.

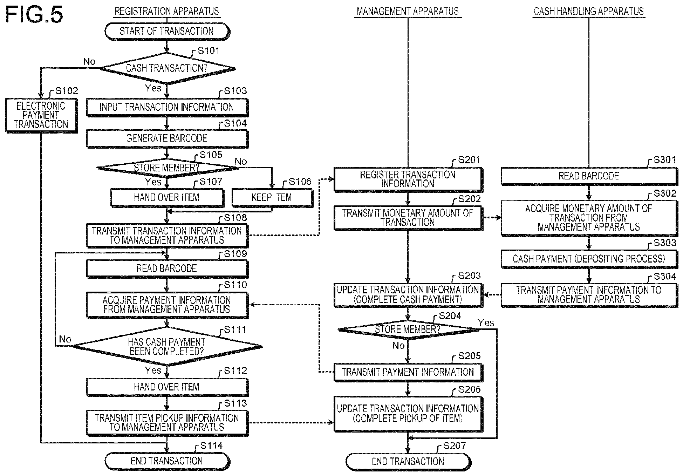

Next, the flow of processing performed in the settlement system will be described. FIG. 5 is a flowchart showing the flow of the processing performed in the settlement system. After starting a transaction, if a customer of a store requests a transaction by electronic payment (step S101; No), the registration apparatus 20 executes the transaction by the electronic payment (step S102) and ends the transaction (step S114) .

If the customer requests the transaction by cash payment (step S101; Yes), the clerk inputs transaction information into the registration apparatus 20 by using the operation/display unit 22 and the barcode reader 25 (step S103). The transaction information includes a monetary amount of the transaction to be paid by cash. If the customer is a member of the store, the transaction information further includes a membership number. The registration apparatus 20 generates a barcode into which a store ID and a transaction ID are encoded, in order to separately manage each transaction information (step S104). For example, the barcode is printed on a receipt by the printer 24 of the registration apparatus 20.

If the customer is not a member of the store (step S105; No), an item that is a target of the transaction is kept in the store (step S106). If the customer is a member of the store (step S105; Yes), the item that is a target of the transaction is handed to the customer immediately at that place (step S107).

The transaction information acquired by the registration apparatus 20 is transmitted to the management apparatus 10 from the registration apparatus 20 (step S108). The management apparatus 10 registers and manages the received information in the transaction information 14 in the memory 13 (step S201).

The customer moves from the installation location of the registration apparatus 20 to the installation location of the cash handling apparatus 30. When the customer causes the cash handling apparatus 30 to read the barcode generated by the registration apparatus 20 (step S301), the cash handling apparatus 30 acquires information about the transaction amount from the management apparatus 10 (step S302). The management apparatus 10 identifies the transaction amount based on the store ID and the transaction ID obtained from the barcode, and transmits the identified transaction amount to the cash handling apparatus 30 (step S202). Thus, the cash handling apparatus 30 acquires the transaction amount.

The cash handling apparatus 30 that has acquired the information about the transaction amount executes a depositing process for cash payment (step S303). The customer completes the cash payment, which is a payment process for paying the transaction amount by cash, by depositing cash equivalent to the transaction amount into the cash handling apparatus 30.

After the cash payment is completed, the cash handling apparatus 30 transmits payment information to the management apparatus 10 (step S304). The payment information includes information indicating that the cash payment has been completed. The management apparatus 10 that has received the payment information updates the transaction information (S203). The transaction information is updated to a state indicating that the cash payment has been completed.

If the customer is a member of the store (step S204; Yes), since the item that is a target of the transaction has already been handed to the customer, the transaction ends here (step S207). If the customer is not a member of the store (step S204; No), the processing is continued.

The customer returns from the installation location of the cash handling apparatus 30 to the installation location of the registration apparatus 20. When the customer causes the registration apparatus 20 to read the barcode that has been generated by the registration apparatus 20 (step S109), the registration apparatus 20 acquires the payment information from the management apparatus 10 (step S110). The management apparatus 10 identifies the payment information based on the store ID and the transaction ID obtained from the barcode and transmits the identified payment information to the registration apparatus 20 (step S205). Thus, the registration apparatus 20 acquires the payment information. The payment information includes information of the payment status indicating whether or not the cash payment has been completed.

The registration apparatus 20 that has acquired the payment information determines whether or not the cash payment has been completed (step Sill). If the cash payment has not been completed (step Sill; No), the next process is not performed. In this case, the clerk is notified that the cash payment has not been completed, and the process is halted until the cash payment is completed. If the cash payment has been completed (step Sill; Yes), the registration apparatus 20 displays information indicating that the cash payment has been completed, on the operation/display unit 22 to notify the clerk of the completion of the cash payment. The clerk who has received the notification hands over the item, which has been kept in the store for the customer who has completed the cash payment, to the customer (step S112). After the item is handed to the customer, the clerk operates the operation/display unit 22 to input information indicating the completion of the transaction, into the registration apparatus 20. Upon receiving this information, the registration apparatus 20 transmits item pickup information to the management apparatus 10 (step S113). The item pickup information includes information indicating that the pickup of the item by the customer has been completed.

The management apparatus 10 that has received the item pickup information updates the transaction information (step S206). The transaction information is updated to a state where the pickup of the item has been completed, and the transaction ends (step S207).

In the present embodiment, as a checking process for checking that cash payment, which is a payment process for a monetary amount of a transaction by cash, has been completed, the cash handling apparatus 30 notifies the management apparatus 10 of the completion of the cash payment, but the checking process is not limited thereto. For example, as the checking process, the cash handling apparatus 30 may print information indicating the completion of the cash payment, on a receipt issued by the registration apparatus 20, in addition to the notification of the completion of the cash payment. For another example, as the checking process, the cash handling apparatus 30 may issue another receipt on which information indicating the completion of the cash payment is printed, in addition to the notification of the completion of the cash payment.

In the present embodiment, information of a transaction amount and information of the completion of cash payment are transmitted and received between the registration apparatus 20 and the cash handling apparatus 30 via the network 70. The information of the transaction amount is preferably transmitted and received between the management apparatus 10 and the cash handling apparatus 30 such that a receipt is not forged to change the transaction amount to be deposited into the cash handling apparatus 30. Similarly, the information of the completion of cash payment is also preferably transmitted and received between the registration apparatus 20 and the cash handling apparatus 30 such that a receipt is not forged to pretend that cash has been deposited into the cash handling apparatus 30. However, the information of the transaction amount and the information of the completion of cash payment may be exchanged using a receipt. For example, the registration apparatus 20 may print a barcode, into which the transaction amount is encoded, on a receipt, and the cash handling apparatus 30 may read the transaction amount from the barcode to perform a depositing process for receiving money equivalent to the transaction amount. The cash handling apparatus 30 may print information indicating the completion of cash payment on a receipt issued by the registration apparatus 20, or may issue another receipt on which information indicating the completion of cash payment is printed, and the clerk of the store 61 may check the receipt to confirm the completion of cash payment, and hands over the item to the customer.

In the present embodiment, information to be exchanged between the registration apparatus 20 and the cash handling apparatus 30 is encoded into a barcode, and the barcode is printed on a receipt. However, the method for exchanging information is not limited thereto as long as the registration apparatus 20 and the cash handling apparatus 30 can acquire necessary information. For example, information to be exchanged may be printed as text on a receipt. In this case, by using the registration apparatus 20 and the cash handling apparatus 30 each include a scanner capable of reading the text printed on the receipt, each process can be advanced as described above.

In the present embodiment, information to be exchanged between the registration apparatus 20 and the cash handling apparatus 30 is printed on a receipt which is a paper medium, but may be recorded in a storage medium capable of storing information therein. For example, a card having an IC chip or the function of a smartphone may be used for exchanging information. Even in the case where information to be printed on a receipt is written and recorded in the IC chip of the card, each process can be advanced as described above. In this case, the process can be performed by using the registration apparatus 20 and the cash handling apparatus 30 each include a card reader that writes and reads information in and from the IC chip of the card. Similarly, even in the case where the barcode to be printed on a receipt is outputted using wireless communication technology and transmitted to the smartphone, each process can be advanced as described above by displaying the barcode on the screen of the smartphone. In this case, the process can be performed by using the registration apparatus 20 and the cash handling apparatus 30 each include a communication unit for transmitting and receiving information to and from the smartphone. For example, a communication unit that performs communication by NFC (Near Field Communication), Bluetooth (registered trademark), or a wireless LAN may be used for exchanging information.

Moreover, information may be exchanged between the registration apparatus 20 and the cash handling apparatus 30 without using a medium. For example, a customer or a clerk operates the operation/display unit 32 of the cash handling apparatus 30 to manually input identification information of the transaction, a target transaction is identified based on the inputted identification information, and each process is advanced as described above. Similarly, a customer or a clerk may operate the operation/display unit 22 of the registration apparatus 20 to input identification information of the transaction, a target transaction may be identified based on the inputted identification information, and each process may be advanced as described above. As long as the registration apparatus 20 and the cash handling apparatus 30 can acquire necessary information, the method for inputting information into the registration apparatus 20 and the cash handling apparatus 30 and the method for outputting information from the registration apparatus 20 and the cash handling apparatus 30 are not particularly limited.

In the present embodiment, the cash handling apparatus 30 is installed in another store close to the store in which the registration apparatus 20 is installed, but the installation location of the cash handling apparatus 30 is not limited thereto. For example, the cash handling apparatus 30 may be installed in a store located far away from the store in which the registration apparatus 20 is installed. For another example, the cash handling apparatus 30 may be installed in a facility such as a station instead of in the store.

In the present embodiment, an item that is a target of a transaction by cash payment is managed in the store until the cash payment is completed, but the method for managing the item is not limited thereto. For example, the store may send an item by courier to a destination or address specified by a customer. For example, the customer can specify a coin locker or a convenience store. When registering a monetary amount of a transaction by using the registration apparatus 20, a clerk obtains the shipping address of the item from the customer and prepares for shipping the item. The clerk operates the operation/display unit 22 to refer to the transaction information 14 managed by the management apparatus 10. After confirming that the customer has completed cash payment by using the cash handling apparatus 30, the clerk ships the item of the customer to the destination or address specified by the customer. Additionally, the management apparatus 10 may be set to notify the registration apparatus 20 of the completion of cash payment. In this case, when the customer completes cash payment by using the cash handling apparatus 30, the management apparatus 10 notifies the registration apparatus 20 of the completion of the cash payment, and the registration apparatus 20 notifies the clerk of the completion of the cash payment. The clerk who has received the notification sequentially ships the item of the customer for which the cash payment has been completed.

In the present embodiment, the configuration example in which the settlement system includes the management apparatus 10, the registration apparatus 20, and the cash handling apparatus 30 is illustrated. However, this configuration is functionally schematic, and the configuration of the settlement system is not physically limited to this configuration. For example, the registration apparatus 20 or the cash handling apparatus 30 may realize some or all of the functions and operations of the management apparatus 10 described above. The distributed or integrated forms of each apparatus are not limited to the above-described example, and all or some of the forms may be distributed or integrated functionally or physically in any unit depending on various loads, use statuses, or the like.

The appearance and configuration of the registration apparatus 20 illustrated in the present embodiment is an example, and the configuration of the registration apparatus 20 is not limited thereto. For example, the printer 24, the barcode reader 25, and the electronic payment processing unit 26 may be provided independently of the registration apparatus 20, and may be communicably connected to the registration apparatus 20 and used.

The appearance and configuration of the cash handling apparatus 30 illustrated in the present embodiment is an example, and the cash handling apparatus 30 is not limited thereto. For example, the barcode reader 34 may be provided independently of the cash handling apparatus 30, and may be communicably connected to the cash handling apparatus 30 and used. For example, the functions and operations of the cash handling apparatus 30 described above may be realized by a POS register and a change machine connected to the POS system. For another example, the cash handling apparatus 30 may be realized by connecting a terminal having an operation/display unit, a banknote handling device for depositing and dispensing banknotes, and a coin handling device for depositing and dispensing coins.

In the present embodiment, a customer selects a cash handling apparatus 30 into which cash equivalent to a monetary amount of a transaction is to be deposited, from among the plurality of cash handling apparatuses 30. However, the management apparatus 10 may specify a cash handling apparatus 30 into which a customer is to deposit cash, and notifies the customer of the specified cash handling apparatus 30. For example, the management apparatus 10 specifies a cash handling apparatus 30 into which cash is to be deposited, based on inventory information for each denomination of money being stored in each cash handling apparatus 30. For example, the management apparatus 10 specifies a cash handling apparatus 30 which store the smallest amount of money. Alternatively, the management apparatus 10 specifies a cash handling apparatus 30 into which cash is to be deposited, based on information about the installation location of each cash handling apparatus 30. For example, the management apparatus 10 specifies a cash handling apparatus 30 to which a movement distance from the present position of the customer is the shortest.

As described above, according to the settlement system, when performing a transaction between a store and a customer, the customer can pay by depositing cash equivalent to a monetary amount of the transaction obtained by inputting item information into the registration apparatus 20 in the store, into the cash handling apparatus 30 installed outside the store. A store that does not want to manage cash for transactions can execute cash payment by using the registration apparatus 20. As a result, the convenience is also improved for a customer who wants to perform a transaction by cash payment.

### INDUSTRIAL APPLICABILITY

As described above, the settlement system and the settlement method according to the present invention are useful for receiving a transaction by cash payment in a store that does not manage cash for transactions.

### DESCRIPTION OF THE REFERENCE CHARACTERS

- 10: Management apparatus
- 11, 21, 31: Control unit
- 12, 22, 32: Operation/display unit
- 13, 23, 33: Memory
- 20 (20a to 20d): Registration apparatus
- 24: printer
- 25, 34: Barcode reader
- 26: electronic Payment processing unit
- 30 (30a to 30c): Cash handling apparatus
- 41: Banknote receiving unit
- 42: Banknote transport unit
- 43: Banknote recognition unit
- 44: Banknote storage unit
- 45: Banknote dispensing unit
- 51: Coin receiving unit
- 52: Coin transport unit
- 53: Coin recognition unit
- 54: Coin storage unit
- 55: Coin dispensing unit
- 70: Network

## Claims

1. A settlement system for performing a settlement for a monetary amount of a transaction when the transaction is performed with a customer in a store, the settlement system comprising:
a registration apparatus installed in the store and configured to register transaction information including a transaction amount of the transaction at the time of the transaction with the customer; and
a cash handling apparatus installed outside the store and configured to receive cash for a payment process of the transaction amount that is included in the transaction information of the customer registered by the registration apparatus and identified for the payment process, and to perform a checking process for indicating that the payment process on the transaction information has been completed.

2. The settlement system according to claim 1, wherein
the registration apparatus makes a medium have information for identifying the registered transaction information, and
the cash handling apparatus receives input of the information from the medium, and identifies the transaction information based on the inputted information.

3. The settlement system according to claim 2, wherein the checking process includes a process of outputting information indicating that the payment process is completed, to the medium.

4. The settlement system according to any one of claims 1 to 3, further comprising
a management apparatus communicably connected to the registration apparatus and the cash handling apparatus, and configured to manage transaction information of each transaction registered by the registration apparatus and identification information for identifying each transaction, in association with each other and manage whether or not the payment process has been completed by using the cash handling apparatus, for each transaction.

5. The settlement system according to claim 4, wherein the cash handling apparatus receives input of the identification information for identifying each transaction, and performs the payment process based on the transaction information that is associated with the inputted identification information and managed by the management apparatus.

6. The settlement system according to claim 4 or 5, wherein the registration apparatus receives input of the identification information for identifying each transaction, and notifies whether or not the payment process on the transaction information has been completed, based on the transaction information that is associated with the inputted identification information and managed by the management apparatus.

7. The settlement system according to any one of claims 4 to 6, wherein
the settlement system includes a plurality of the cash handling apparatuses, and
the management apparatus specifies a cash handling apparatus that is to receive the cash from the customer to perform the payment process, based on inventory information for each denomination of money being stored in each cash handling apparatus.

8. The settlement system according to any one of claims 1 to 7, wherein the registration apparatus does not handle cash.

9. The settlement system according to any one of claims 1 to 8, wherein the registration apparatus includes an electronic payment processing unit configured to process the transaction amount by electronic payment at the time of the transaction with the customer.

10. A settlement method for performing a settlement for a monetary amount of a transaction when the transaction is performed with a customer in a store, the settlement method comprising:
registering, by a registration apparatus installed in the store, transaction information including a transaction amount of the transaction at the time of the transaction with the customer;
receiving, by a cash handling apparatus installed outside the store, cash for a payment process of the transaction amount that is included in the transaction information of the customer registered by the registration apparatus and identified for the payment process; and
performing a checking process for indicating that the payment process on the transaction information has been completed.
